# EUROPEAN PATENT SPECIFICATION

(11) **EP 2 660 220 B1**
(45) Date of publication and mention of the grant of the patent: **31.01.2018**
(21) Application number: 11853779.4
(22) Date of filing: 21.06.2011
(51) Int. Cl.: C04B 33/13

(54) **METHOD FOR PRODUCING AN AQUEOUS CLAY PASTE**
VERFAHREN ZUR HERSTELLUNG EINER WÄSSRIGEN TONPASTE
PROCÉDÉ POUR LA FABRICATION D'UNE PÂTE AQUEUSE D'ARGILE

(30) Priority: 31.12.2010 ES 201032018 P
(43) Date of publication of application: 06.11.2013
(73) Proprietor: Vujic, Dura, Novi Sad (RS); Sremac, Sinisa, 21000 Novi Sad (YU)
(72) Inventor: Vujic, Dura, Novi Sad (RS); Sremac, Sinisa, 21000 Novi Sad (YU)
(74) Representative: Ungria López, Javier
(86) International application number: PCT/ES2011/070448
(87) International publication number: WO 2012/089874

(56) References cited:
- WO-A1-2008/017082
- WO-A1-2008/017082
- WO-A2-02/24597
- DE-A1- 1 542 202
- SU-A1- 420 595
- US-A- 3 547 664

## Description

### Field of the invention

The present invention refers to the field of producing ceramic products, especially those to be used in constriction.

### State of the art prior to the invention

In the ceramic industry field, the elaboration process for ceramic products made of clay and other raw materials is known. This process usually entails milling and forming a wet paste, known as slip (barbotine), with a certain ratio of water and clay. Said paste is submitted to a thermal treatment in which a series of chemical reactions occur between the polysilicates (silicates and aluminosilicates) found in the clay. When the clay does not contain enough polysilicates, it is necessary to mix it with clays rich in this kind of compound, in order to obtain the quality desired in the end product in terms of water absorption, hardness, color, capillarity, calcium oxide CaO content, etc. Likewise, it is possible to improve the quality of the end product by adding other compounds which may consist, for example, of organic material such as straw, polyethylene, petroleum based products, anthracite, paper pulp, etc.

One of the main limitations of the ceramic product production process stems from the large stretch of time required to dry the starting material, which in turn is caused by the low temperatures required in order to prevent potential cracks or fissures from forming. Similarly, an additional drawback of this process is that the firing temperatures used must be very high in order to obtain the mechanical properties (such as hardness, water absorption etc.), required in the final product. These temperatures of over 900 °C cause the carbonates to be decomposed into carbon dioxide (CO₂) and calcium oxide (CaO). Part of the calcium oxide reacts with the silicates and the carbon dioxide (CO₂) is released into the atmosphere. In this way, as a result of the carbonates having decomposed, around half their mass is lost in CO₂ form. Depending on the total amount of carbonates in the clay, this gives rise to significant weight loss in the final product. Therefore, for example, when the carbonates represent 15% by weight of the clay, the total weight loss caused by the carbonates decomposition is approximately 7%.

The closest background to the present invention is the International Application WO2008/017082. In this application, a method for preparing a starting substance to produce clay products is described, this method entails adding 10% to 20% of an inert material, to which 1% of sodium silicate has previously been added, followed by 0.4% of phosphoric acid.

Henceforth, an improved process, in comparison to the previous method, constitutes the object of this invention, based on using a soluble base, which is preferably sodium hydroxide. This makes it possible to modify the acidity of the water and clay suspension (slip), whilst preventing the precipitation of the hydrated sodium silicate (also known as water glass). This prevents the silicic acid [SiO₂ (H₂Oₙ] from crystallizing, which stops it from being part of the formation of polysilicates.

The final aim of the invention is thus to successfully modify the properties of conventional clay in accordance with the requirements of the current process, thereby avoiding modifying the technology used in the process. This results in reduced energy consumption during the process, whilst also improving the mechanical properties of the final product.

In addition, the method object of the present invention is particularly suitable for producing ceramic products by means of firing. In general, the usual firing methods applied to make ceramic products may involve only firing them once (monocottura) or, firing them twice (biocottura). One of the advantages of the present invention method is that it is suitable for both types of firing. When the product is fired twice, the temperature at which the first firing step is carried out is reduced to temperatures of between 350 °C and 650 °C. The second firing step, however, only varies in terms of time; the temperature is not modified owing to the temperature required by the varnishes. Moreover, biocottura (firing twice) is employed when the percentage of organic material is high, in order to prevent the clay bisque from swelling, in addition to possible defects in the final products resulting from the degassing which takes place during the process. These defects not only make the first firing step longer and cause the clay bisque to swell but also prevent clays rich in carbonates and organic material from being used, when they form more than 30% by weight of the clay mixture. The present invention method makes it possible to resolve the abovementioned problems, also making it possible to degas the ceramic paste without producing defects in the final product. This creates the possibility of using clays rich in carbonates and organic material, without having to mix them with other types of clay or having to alter the mineral composition of the raw material used in the process. Likewise, thanks to the improved mechanical properties, it is possible to obtain thinner ceramic products, preferably tiles, which in turn reduces the costs incurred from the cutting process, whilst at the same time improving the mechanical properties of the final product.

### Invention description

A first object of this invention is therefore a method for producing an aqueous clay paste (slip), characterized in that it comprises the following steps:
a) preparing a suspension of clay and water by means of wet grinding, preferably by using at least one ball mill. The ratio of clay to water used in the suspension will preferably be between 100:40 and 100:70. More preferably still, this ratio of clay to water will be 100:62;
b) adding phosphoric acid (H₃PO₄) to the clay and water suspension obtained in the preceding step and subsequently grinding the mixture obtained. The phosphoric acid (H₃PO₄) reacts with the carbonates in the mixture and reduces the pH value below 7;
c) following step (b), adding at least one water-soluble base, preferably sodium hydroxide and subsequently grinding the mixture obtained. This increases the pH value of the suspension above 8 and preferably up to a pH value between 9 and 10 and;
d) following the previous step (c), adding hydrated sodium silicate [(Na₂O)ₙ (SiO₂)ₘ (H₂O)ₖ] and subsequently grinding the mixture obtained. Owing to the increased pH value resulting from adding the sodium hydroxide, the hydrated sodium silicate remains in aqueous solution, preventing its precipitation as silicic acid crystals [SiO₂ (NH₂O)ₙ]. An aqueous clay paste, known as slip, is thus obtained.

For the purposes of this patent, clay is understood to mean a mixture of hydrated aluminum silicate aggregates produced by the decomposition of aluminum minerals. Should the clay comprise less than 3% by weight of carbohydrates, the method may likewise involve an initial step in which carbonates are added, preferably by means of mixing the clay selected with at least one other clay rich in carbonates, most preferably limestone [CaCO₃].

Furthermore, in step (a) of the method for preparing the clay and water suspension, it is possible to use at least one deflocculant, preferably sodium tripolyphosphate. The amount of deflocculant added to the suspension depends on the type of clay used in the method. This amount may preferably range between 0.18% and 0.32% by weight relative to the total.

It is preferable that the SiO₂/Na₂O ratio in the hydrated sodium silicate [(Na₂O)ₙ (SiO₂)ₘ (H₂O)ₖ] is at least 3.0 w/w or the highest available. In this way, even if the percentage of SiO₂ used is preferably the greatest possible, said percentage cannot be limited, since any industrially available percentage may be used. The SiO₂ content in the hydrated sodium silicate will be approximately 30% by weight. In one particular embodiment of the invention, in which the grinding takes place in wet conditions, the hydrated sodium silicate [(Na₂O)ₙ (SiO₂)ₘ (H₂O)ₖ] may be used in solid crystal form. Similarly, the sodium hydroxide may be used in both solution and in flakes (in this case, provided that the grinding takes place in wet conditions).

The phosphoric acid (H₃PO₄) used in the method may specifically consist of industrial quality phosphoric acid, with a 75% v concentration. Preferably the weight ratio of the phosphoric acid solution and hydrated sodium silicate is between 1:1 (w/w) and 1:5 (w/w), a ratio of 1:3 (w/w) being especially preferred.

Regarding the sodium hydroxide, as described above, it may be used in both caustic soda flakes (when there is a wet grinding) and in aqueous solution, preferably being used in an aqueous solution at 50%. In general, the amount of sodium hydroxide used will depend on the percentage of phosphoric acid, a ratio between both compounds of 1:1 (w/w) being especially preferred. The exact amount of sodium hydroxide shall be determined, in each case, by the clay's cationic and anionic capacities.

By adding the sodium hydroxide prior to adding the hydrated sodium silicate, it is possible to prevent the precipitation of said compound (hydrated sodium silicate), thus obtaining an aqueous clay paste (slip) with normal viscosity and a dry material content higher than that of the clay itself.

In this way, an aqueous clay paste (slip), which can be obtained by means of the previous method, is also object of this invention, as well as its use for producing at least one ceramic product.

Likewise, an additional object of the invention is a method for producing at least one ceramic product from an aqueous clay paste obtainable by the method set out above, wherein said method is characterized in that it comprises the following steps:
a) drying the aqueous clay paste, preferably by means of atomization;
b) molding and firing the clay paste obtained in the previous step; the molding may preferably take place by means of pressing or extrusion.

As a result of the phosphoric acid being added in the previous steps of the method, the carbonates present in the clay react, giving rise to compounds with accessible (soluble) calcium ions, said compounds preferably being (primary, secondary or tertiary) calcium phosphates. Therefore, during the subsequent drying and firing step, the clay phosphates react, giving rise to various types of polyphosphates, the hydrated sodium silicate accessing the calcium in the calcium phosphates, in turn giving rise to various (primary, secondary and tertiary) polysilicates. Consequently, firing takes place at temperatures lower than 900°C, these temperatures preventing the rest of the carbonates present in the clay paste from decomposing.

This way, one of the advantages of the procedure of the present invention is reducing the drying temperature by at least 100°C, with respect to the temperature at which said drying process is usually carried out. Similarly, the time needed to complete said drying step is 1/2 to 2/3 less than the time usually required for drying. The humidity of the clay paste will preferably be approximately 6% following the drying step. Likewise, in a preferred embodiment of the invention, the method may likewise involve an additional grinding step of the clay paste, following the drying step and prior to the firing step.

If the clay presents a moisture content that does not vary significantly after the drying step (preferably by means of atomization), it may be used directly in the subsequent molding and firing steps. Nevertheless, given that it is not always possible to control said parameter (humidity) perfectly during the daily production process, in a particular embodiment of the invention, it will be possible to store the clay paste following the drying step, prior to molding and firing. This storage may take the form of silos and the step typically lasts approximately 24 hours.

Likewise, in a preferred embodiment of the invention, prior to the firing step, the at least one varnish and/or engobe may be added, with the aim of obtaining a flat, glazed surface in the final product.

In addition, molding the clay paste by means of pressing after it has been dried, gives rise to a product which may be fired in a short period of time at a temperature of at least 100°C less than normal (this usual temperature being over 900°C). The most suitable firing temperature will depend on the product type and raw material used (clay compound and carbonate content).

Furthermore, the ceramic product object of the invention has improved mechanical properties when compared to those products obtained using conventional molding and firing processes. It is thereby possible to increase the hardness of ceramic products by at least 30% in comparison to the hardness of conventional products, as a result of polysilicates being formed during the process.

Similarly, gasses are eliminated during the firing process at temperatures below the usual, thus reducing the firing cycles significantly and preventing the end product from becoming deformed.

In addition, the use of the ceramic product obtained by following the method described herein is an object of this invention and preferably, the use in the construction industry. Preferably, these ceramic products may consist, for example, of bricks, slates, slabs, tiles and porcelains, etc.

### Brief description of the drawings

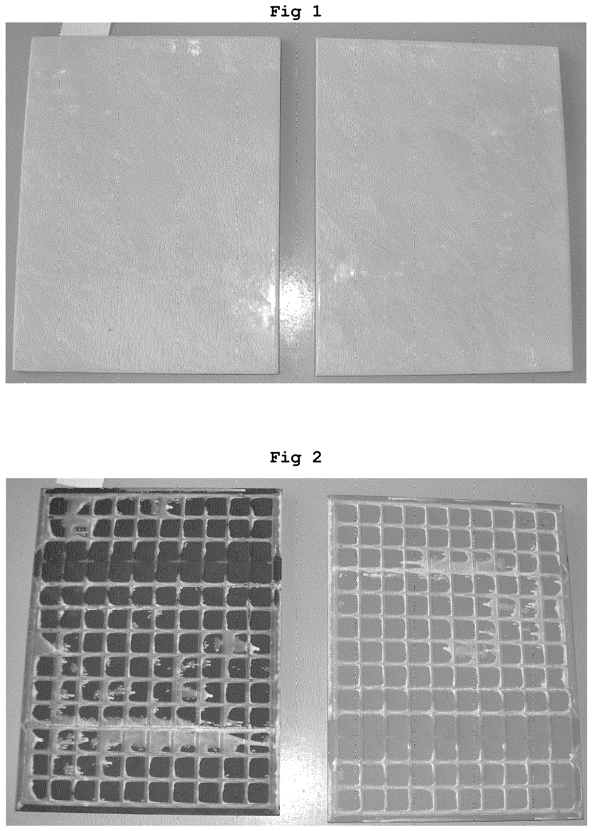

Figure 1 represents the front face of a ceramic product (a glazed tile) obtained in the conventional way (*Esmalglass S.A.* brand) (on the left) and obtained by the invention method (on the right);
Figure 2 represents the rear face of a ceramic product (a glazed tile) obtained in the conventional way (*Esmalglass S.A.* brand) (on the left) and obtained by the invention method (on the right);

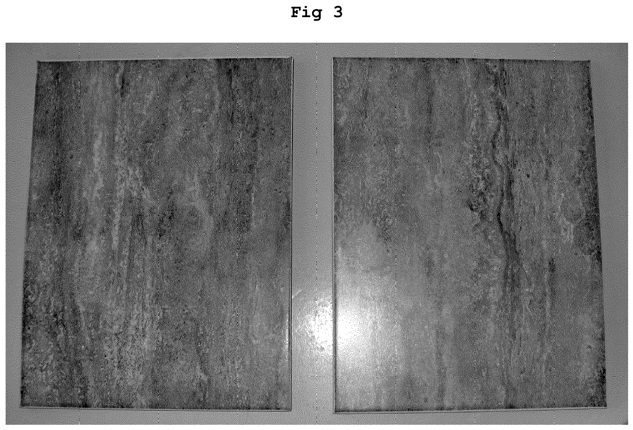

Figure 3 represents the rear face of a ceramic product (a matte tile) obtained in the conventional way (*Quimicer, S.A.* brand) (on the left) and obtained by the invention method (on the right).

### Example of embodiment 1

Below, by way of a non-limiting example, a particular embodiment of the invention is described. Two types of compositions were produced:
- a first clay composition C1 made of 100% yellow clay rich in carbonates (approximately 27% by weight, with approximately 20% by weight of sand);
- a second clay composition C2 made from a mixture of clays and minerals with a yellow clay content of 27% by weight (with a total percentage by weight of carbonates of approximately 14% and approximately 9% by weight of sand).
In order to conduct the tests, the following additives were used:
- Additive A: Sodium silicate 3.SiO₂.Na₂O (N°CAS 1344-09-8);
- Additive B: Industrial phosphoric acid (with a 75% v gradient);
- Additive C: Sodium Hydroxide NaOH (50% in aqueous solution, based on NaOH (CAS No. 1310-73-2)).
The following samples were prepared using compositions C1 and C2 and additives A, B, and C for testing:
- Sample 1: 100% yellow clay with additives, prepared in the laboratory by means of wet grinding (without atomizing);
- Sample 2: 100% yellow clay, prepared in the laboratory by means of wet grinding (without atomizing);
- Sample 3: Conventional industrial clay mixture (C2) for producing wall tiles, prepared in the laboratory by means of wet grinding (without atomizing);
- Sample 4: Conventional industrial clay mixture (C2) for producing wall tiles, prepared industrially by means of (atomized) wet grinding.

### Preparing sample 1

In the tests carried out, 3 kg of clay were used and divided into three 1 kg groups (in accordance with the laboratory mill specifications).

A suspension of clay and water was first prepared in a dry material and water ratio of 100:62. Deflocculant (sodium tripolyphosphate) was added to said suspension, which generally, depending on the type of clay, is preferably between 0.18% and 0.32% by weight of said suspension. Once the deflocculant had been added, the mixture was ground for two minutes.

After having stopped the mill, additive B (phosphoric acid) was introduced at 0.3% by weight (3 g) and was ground for an additional three minutes.

After having stopped the mill, additive C (sodium hydroxide in 50% aqueous solution) was added at 0.3% by weight (6 g given that the percentage 0.3% refers to the percentage of dry material and the sodium hydroxide is employed in an aqueous solution at 50%). Once added, grinding was continued for five minutes.

After having stopped the mill, additive A (hydrated sodium silicate) was added at 0.9% by weight (9 g) and the grinding continued for a further five minutes.

Once the grinding had finished (after a total of 15 minutes), the slip prepared was dried until a moisture gradient of approximately 6% was obtained. This clay paste was subsequently ground before being compressed.

The remaining samples were prepared by means of grinding and were then submitted to a firing process in industrial conditions. Sample 1 was fired in the laboratory since it was impossible to fire such small sample sizes in industrial conditions at a temperature of 600 °C.

The results of the tests carried out are presented in table 1:

**Table 1**

| **Parameters** | | **Sample 1** | **Sample 2** | **Sample 3** | **Sample 4** |
|---|---|---|---|---|---|
| Composition (%) | Deflocculant | 0.25 | 0.25 | 0.25 | 0.25 |
| | Additive B | 0.30 | | | |
| | Additive C | 0.30 | | | |
| | Additive A | 0.90 | | | |
| | Dry material: Water | 100:62 | 100:62 | 100:62 | 100:59 |
| Slip | Grinding time | 15' | 15' | 35' | 3.5 h |
| | pH | 11.16 | 8.44 | 8.61 | |
| | Moisture (%) | 38.90 | 37.84 | 37.92 | |
| | Viscosity (mPa.S) | 40 | 39 | 36 | |
| Powder | Water (%) | 5.39 | 5.36 | 5.48 | 6.17 |
| | Loss on ignition (%) | 13.53 | 14.09 | 8.96 | 9.05 |
| | Carbonates (%) | 20.43 | 26.97 | 13.89 | 13.89 |
| | Size (mm) | 120.13 | 120.12 | 120.31 | 120.30 |
| Raw tiles P=50 bar | Flexural strength (N/ mm²) | 1.02 | 0.83 | 0.65 | 0.82 |
| Dry tiles | Flexural strength (N/ mm²) | 2.87 | 3.29 | 3.17 | 4.21 |

| **Laboratory** | | | | | |
|---|---|---|---|---|---|
| Fired tiles | Size (mm) | 119.82 | 120.07 | 120.86 | 120.69 |
| | Water absorption (%) | 22.49 | 23.27 | 21.04 | 20.72 |
| | Flexural strength (N/ mm²) | 2.89 | 2.61 | 2.22 | 2.88 |

| **Industry** | | | | | |
|---|---|---|---|---|---|
| Fired tiles | Size (mm) | 119.10 | 119.86 | 119.52 | 119.38 |
| | Water absorption (%) | 19.46 | 23.22 | 18.83 | 18.71 |
| | Flexural strength (N/ mm²) | 10.20 | 7.70 | 9.19 | 8.45 |

Based on the results collected in table 1, we can conclude that sample 1 offers:
- reduced carbonate content;
- improved mechanical resistance (in 50% of both raw and fired products in sample 1);
- a reduced first firing cycle, at 600°C;
- the possibility of creating thinner products (tiles), as well as the possibility of reducing total production costs significantly;
- the possibility of preventing the bisque (fired clay paste) from "swelling" and preventing the end product from becoming deformed.

### Example of embodiment 2

In this second example, the method object of the invention was carried out using 9000 kg of yellow clay with a moisture content of approximately 17%.

Table 2 presents the data on the raw material used in the method:

**Table 2**

| Description | DIN-100 (g/kg) | Mass (%) | Weight (kg) |
|---|---|---|---|
| Yellow clay (18% moisture) | 210 (% Ca) | 100 | 9000 |
| Sodium tripolyphosphate (deflocculant) | | 0.25 | 23 |
| Water (1) | | | 3900 |
| Additive B | | 0.3 | 21 |
| Additive C | | 0.3 | 42 |
| Additive A | | 0.9 | 63 |

Additive C was used as an aqueous solution at 50%, where 0.3% refers to the dry material and the total weight percentage was 42 kg (rather than 21 kg).

In this case, once the clay was introduced into the mill, the water and deflocculant were added and the mixture obtained was ground. Additive B was then added, continuing to be ground for a total of 30 minutes. After this period of time elapsed, the mill was stopped and the pH was measured, with a resulting value of approximately 5-6.

Additive C was subsequently added. After 30 minutes of grinding, the mill was stopped and the pH was measured, a value of over 8 being obtained. Finally, additive A was added. After taking samples in order to control the viscosity, it was decided to grind the mixture for a further 3 hours. The results of the slip sample were as follows: 1585 g/l in density, 145 g/l rejection, 59% dry matter and 7.4% CaCO₃. Rejection refers to remains in the slip following a sifting process (illustrated in table 3 below). When the rejection is greater than 100 g/l, it is necessary to return to the grinding process, which is why the optimal rejection value is less than 100 g/l.

The total grinding time was approximately 4 hours (3628 revolutions of the wet mill). This was highly advantageous given that generally speaking, at least 4000 mill revolutions are required in industry in order to obtain satisfactory results. In this case, the final results following the grinding of the slip were as follows: 1585 g/l in density, 53 seconds in viscosity, 94 g/l rejection, 59% dry matter and 7.4 % CaCO₃. The viscosity was determined using 100 ml of slip in a glass with a 1 mm-diameter opening. The time needed for the entire the slip to come out was 53 seconds, the optimal time being between 47 and 57 seconds.

Therefore, the slip obtained had an excellent viscosity, favoring the emptying of the mill and leading to very little residue in the vibrating sieves.

### Drying the slip

Once the slip was obtained, the drying process began by atomization at a temperature of 370°C, thus resulting in a temperature reduction of 180°C in comparison to the usual temperature. Therefore, an atomized powder with acceptable moisture was obtained. The pump pressure during the atomization was 24 atmospheres. Table 3 presents the results obtained on the atomized clay sample after drying, prior to being stored in a silo:

**Table 3**

| Sieve 500 µm | Sieve 315 µm | Sieve 250 µm | Sieve 125 µm | Sieve 90 µm | Rejection | Moisture (%) | Bulk weight |
|---|---|---|---|---|---|---|---|
| 7.8 | 42.2 | 19.4 | 24.4 | 2.6 | 2.8 | 6.2 | 971 |
| 8.0 | 38.2 | 20 | 26.4 | 3.2 | 3.4 | 6.5 | 980 |
| 7.6 | 41 | 21 | 26.2 | 2.6 | 2.2 | 5.5 | 974 |
| 7.8 | 41 | 20 | 25.4 | 3 | 3.2 | 5.5 | 983 |

Similarly, table 4 displays the results obtained with the atomized clay sample after storage in a silo for approximately 24 hours, prior to pressing:

**Table 4**

| Sieve 500 µm | Sieve 315 µm | Sieve 250 µm | Sieve 125 µm | Sieve 90 µm | Rejection | Moisture (%) |
|---|---|---|---|---|---|---|
| 5.4 | 36.6 | 22.4 | 30.4 | 3.4 | 3.4 | 5.8 |

### Molding and firing

Pressing, varnishing and firing were then tested on the ceramic paste obtained and compared to two conventional pieces (of the *Esmalglass S.A.* brand (glossy) and *Quimicer S.A* brand (matte)).

Pressing was carried out at a standard pressure (270 kg/cm²) and drying was carried out at a temperature of 175°C (slightly higher than the conventional temperature of approximately 160°C).

Next, engobe, reduced to 5 g per tile (from 40 g) was applied. Likewise, the amount of varnish added was reduced to 7 g per tile (from 65 g). In the tests carried out, a higher flexural strength was observed with respect to wet and dry tiles. Table 5 shows the results obtained:

**Table 5**

| | Conventional Clay | Clay with additives | | |
|---|---|---|---|---|
| | MM-5 | Yellow | Yellow | Yellow |
| Height of the first reduction (mm) | 3.7 | 3.5 | 3.5 | 3.5 |
| Thickness when not fired (mm) | 7.8 | 7.8 | 7.8 | 7.8 |
| Weight when pressed and not fired (g) | 1222.9 | 1247.2 | 1247.2 | 1247.2 |
| Dry weight of the molded parts (g) | | 1146.5 | | |
| Weight of the fired pieces (g) | | 1052.6 | 1054.5 | 1128.1 |
| Total mass lost (%) | | 15.6 | 15.4 | 9.5 |
| Folding of the unfired solid (MPa) | 0.55 | 0.9 | 0.9 | 0.9 |
| Folding of the dry solid (MPa) | 1.7 | 3.9 | 3.9 | 3.9 |
| Flexural strength of the ceramic paste (MPa) | 15 | 27.13 | 16.5 | 13.1 |
| Residual moisture after drying (%) | | 0.2 | | |
| Dimensions when not fired (mm) | 253.3-334.3 | 252.5-333.5 | 252.5-333.5 | 252.5-333.5 |
| Dimensions when dry (mm) | | 252-332.5 | | |
| Dimensions when fired (mm) | 249.8-329.9 | 241.6-319.4 | 248.1-327.7 | 252.2-332.9 |
| Total reduction (%) | 1.38-1.3 | 4.3-4.2 | 1.7-1.7 | 0.11-0.18 |
| Absorption of the paste (%) | 15.5 | 9.8 | 15.42 | 18.5 |
| Cycle - 47 minutes, temperature (0 °C) | 1137-1145 | 1137-1145 | 1115-1120 | 1060-1065 |
| Dissipation at the intersection of the kiln dimensions (mm) | 0.7-1.5 | 2.4-4.3 | 0.5-0.5 | 0.1-0.2 |

The conventional MM-5 clay sample is a mixture of clays in which the percentage of yellow clay does not exceed 30%. The aim was to provide local yellow clay samples with properties suitable for production. Therefore, the properties of the yellow clay were modified in order to make them suitable to those of the yellow MM-5 clay sample with a reduction in energy consumption and improved mechanical properties.

The results shown in table 5 clearly demonstrate, according to variations in the pressing process and temperature variations, that all the samples obtained meet European standard requirements. Nevertheless, it was noted that the temperature of 1060°C did not extend the varnishes perfectly given the temperature reduction. Therefore, according to the results obtained, the best results can be obtained at temperatures of around 1000 °C in terms of conserving the varnishes as well as preventing the fired tiles from contracting and preventing potential modifications in the mold.

## Claims

1. Method for producing an aqueous clay paste, **characterized in that** it comprises the following steps:
a) preparing a suspension of clay containing carbonates and water by means of wet grinding, with a clay to water ratio in the suspension of between 100:40 and 100:70 by weight;
b) adding phosphoric acid to the clay and water suspension obtained in the preceding step and subsequently grinding the mixture obtained, reducing the pH value below 7;
c) following step (b), adding at least one water-soluble base and subsequently grinding the mixture obtained, increasing the pH value of the suspension above 8; and
d) following step (c), adding hydrated sodium silicate, and subsequently grinding the mixture obtained.

2. Method according to claim 1, wherein the water-soluble base consists of sodium hydroxide.

3. Method according to claim 2, wherein the sodium hydroxide is used in caustic soda flakes or in aqueous solution at 50%.

4. Method according to any one of the claims 1 to 3, wherein the percentage of carbonates in the clay is at least 3% by weight.

5. Method according to any one of the previous claims, wherein step (a) is carried out in addition to adding at least one deflocculant.

6. Method according to 5, wherein the deflocculant is sodium tripolyphosphate.

7. Method, according to any one of the previous claims, wherein the SiO₂/ Na₂O ratio in the hydrated sodium silicate is at least 3.0 w/w.

8. Method according to any of the previous claims, wherein the ratio of phosphoric acid to hydrated sodium silicate is between 1:1 (w/w) and 1:5 (w/w).

9. Aqueous clay paste obtainable by a method according to any one of the previous claims.

10. Aqueous clay paste, according to claim 9, **characterized in that** it has a pH of above 8.

11. Use of an aqueous clay paste, according to claim 9 or 10, for producing at least one ceramic product.

12. Method for producing at least one ceramic product from an aqueous clay paste, obtained by a method according to any one of the claims 1 to 8, wherein said method is **characterized in that** it comprises the following steps:
a) partially drying the aqueous clay paste;
b) molding and firing the partially dried aqueous clay paste obtained in the previous step.

13. Method according to claim 12, wherein the aqueous clay paste is partially dried by means of atomization.

14. Method according to claim 12 or 13, wherein molding is carried out by means of pressing or extrusion.

## Patentansprüche

1. Verfahren für die Herstellung einer wässrigen Tonpaste, **dadurch gekennzeichnet, dass** es die folgenden Schritte umfasst:
a) Vorbereiten einer Suspension aus Ton, der Carbonat enthält, und Wasser, mittels Nassschleifen mit einem Ton-Wasser-Verhältnis in der Suspension zwischen 100:40 und 100:70, bezogen auf das Gewicht;
b) Zugeben von Phosphorsäure zu der in der vorhergehenden Stufe erzeugten Ton- und Wassersuspension und anschließendes Mahlen der erzeugten Mischung, wodurch der pH-Wert unter 7 reduziert wird;
c) nach Schritt (b) Hinzufügen von wenigstens einer wasserlöslichen Base und anschließendes Mahlen der erzeugten Mischung, Erhöhen des pH-Wertes der Suspension über 8; und
d) nach Schritt (c), Hinzufügen von hydratisiertem Natriumsilikat und anschließendes Mahlen der erzeugten Mischung.

2. Verfahren nach Anspruch 1, bei dem die wasserlösliche Base aus Natriumhydroxid besteht.

3. Verfahren nach Anspruch 2, bei dem das Natriumhydroxid in Ätznatronflocken oder einer wässrigen Lösung bei 50% verwendet wird.

4. Verfahren nach einem der Ansprüche 1 bis 3, bei dem der Anteil von Carbonaten in dem Ton mindestens 3 Gew.-% beträgt.

5. Verfahren nach einem der vorhergehenden Ansprüche, bei dem der Schritt (a) zusätzlich zur Zugabe von mindestens einem Entflockungsmittel durchgeführt wird.

6. Verfahren nach Anspruch 5, bei dem das Entflockungsmittel Natriumtripolyphosphat ist.

7. Verfahren nach einem der vorhergehenden Ansprüche, bei dem das SiO₂/Na₂O-Verhältnis in dem hydratisierten Natriumsilikat mindestens 3,0 w/w beträgt.

8. Verfahren nach einem der vorhergehenden Ansprüche, bei dem das Verhältnis von Phosphorsäure zu hydratisiertem Natriumsilikat zwischen 1:1 (w/w) und 1:5 (w/w) liegt.

9. Wässrige Tonpaste, die man durch ein Verfahren nach einem der vorhergehenden Ansprüche erzeugen kann.

10. Wässrige Tonpaste nach Anspruch 9, **dadurch gekennzeichnet, dass** sie einen pH-Wert von über 8 aufweist.

11. Verwendung einer wässrigen Tonpaste nach Anspruch 9 oder 10 zur Herstellung von wenigstens einem keramischen Produkt.

12. Verfahren zur Herstellung von wenigstens einem keramischen Produkt aus einer wässrigen Tonpaste, die man durch ein Verfahren nach einem der Ansprüche 1 bis 8 erhält, wobei das Verfahren **dadurch gekennzeichnet ist, dass** es die folgenden Schritte umfasst:
a) teilweises Trocknen der wässrigen Tonpaste; und
b) Ausformen und Brennen der teilweise getrockneten wässrigen Tonpaste, die man beim vorhergehenden Schritt erhält.

13. Verfahren nach Anspruch 12, bei dem die wässrige Tonpaste teilweise mittels Zerstäubung getrocknet wird.

14. Verfahren nach Anspruch 12 oder 13, bei dem das Ausformen durch Pressen oder Extrudieren erfolgt.

## Revendications

1. Procédé de production d'une pâte aqueuse d'argile, **caractérisé en ce qu'**il comprend les étapes suivantes :
a) préparation d'une suspension d'argile contenant des carbonates et de l'eau au moyen d'un broyage par voie humide, avec un rapport argile à eau dans la suspension de 100:40 à 100:70 en masse ;
b) addition d'acide phosphorique à la suspension d'argile et d'eau obtenue dans l'étape précédente et broyage subséquent du mélange obtenu, réduisant la valeur de pH en dessous de 7 ;
c) après l'étape (b), addition d'au moins une base soluble dans l'eau et broyage subséquent du mélange obtenu, augmentation de la valeur du pH de la suspension au-dessus de 8 ; et
d) après l'étape (c), addition de silicate de sodium hydraté, et broyage subséquent du mélange obtenu.

2. Procédé selon la revendication 1, dans lequel la base soluble dans l'eau est constituée d'hydroxyde de sodium.

3. Procédé selon la revendication 2, dans lequel l'hydroxyde de sodium est utilisé dans des flocons de soude caustique ou dans une solution aqueuse à 50 %.

4. Procédé selon l'une quelconque des revendications 1 à 3, dans lequel le pourcentage de carbonates dans l'argile est d'au moins 3 % en masse.

5. Procédé selon l'une quelconque des revendications précédentes, dans lequel l'étape (a) est réalisée avec en plus l'addition d'au moins un déflocculant.

6. Procédé selon la revendication 5, dans lequel le déflocculant est le tripolyphosphate de sodium.

7. Procédé, selon l'une quelconque des revendications précédentes, dans lequel le rapport de SiO₂/Na₂O dans le silicate de sodium hydraté est d'au moins 3,0 masse/masse.

8. Procédé selon l'une quelconque des revendications précédentes, dans lequel le rapport d'acide phosphorique à silicate de sodium hydraté est de 1:1 (masse/masse) à 1:5 (masse/masse).

9. Pâte aqueuse d'argile pouvant être obtenue par un procédé selon l'une quelconque des revendications précédentes.

10. Pâte aqueuse d'argile selon la revendication 9, **caractérisée en ce qu'**elle présente un pH supérieur à 8.

11. Utilisation d'une pâte aqueuse d'argile, selon la revendication 9 ou 10, pour la production d'au moins un produit céramique.

12. Procédé de production d'au moins un produit céramique à partir d'une pâte aqueuse d'argile, obtenue par un procédé selon l'une quelconque des revendications 1 à 8, dans lequel ledit procédé est **caractérisé en ce qu'**il comprend les étapes suivantes :
a) séchage partiel de la pâte aqueuse d'argile ;
b) moulage et cuisson de la pâte aqueuse d'argile partiellement séchée obtenue dans l'étape précédente.

13. Procédé selon la revendication 12, dans lequel la pâte aqueuse d'argile est partiellement séchée au moyen d'atomisation.

14. Procédé selon la revendication 12 ou 13, dans lequel le moulage est réalisé au moyen de pression ou d'extrusion.
